# EUROPEAN PATENT SPECIFICATION

(11) **EP 0 550 423 B1**
(45) Date of publication and mention of the grant of the patent: **26.01.2000**
(21) Application number: 93250070.5
(22) Date of filing: 21.02.1989
(51) Int. Cl.: D06F 37/02, D06F 25/00, D06F 95/00, D06F 39/08

(54) **Drum washing machine with means for discharging the laundry**
Trommelwaschmaschine mit Vorrichtung zum Entladen von Wäsche
Machine à laver à tambour avec dispositif pour décharger le linge

(30) Priority: 23.02.1988 JP 4051388; 28.07.1988 JP 18866188; 13.09.1988 JP 22741888; 26.10.1988 JP 13976688; 15.03.1988 JP 6128188; 06.12.1988 JP 30694288; 25.01.1989 JP 1558089
(43) Date of publication of application: 07.07.1993
(62) Divisional of application: 89730040.6
(73) Proprietor: MITSUBISHI JUKOGYO KABUSHIKI KAISHA, Tokyo (JP); Churyo Engineering Kabushiki Kaisha, Nagoya-shi Aichi-ken (JP)
(72) Inventor: Ueda, Atsushi, c/o Nagoya Machinery Works, Nakamura-ku, Nagoya, Aichi Pref. (JP); Yamada, Shuji, c/o Churyo Engineering K.K., Nagoya-shi, Aichi ken (JP); Yagami, Kenichi, c/o Nagoya Machinery Works, Nakamura-ku, Nagoya, Aichi Pref. (JP); Tsubaki, Yasuhiro, c/o Nagoya Techn. Institute, Nakamura-ku, Nagoya, Aichi Pref. (JP); Ishihara, Hidetoshi, c/o Nagoya Machinery Works, Nakamura-ku, Nagoya, Aichi Pref. (JP); Kitajima, Kazuo, c/o Nagoya Techn. Institute, Nakamura-ku, Nagoya, Aichi Pref. (JP); Hayashi, Shoichi, c/o Nagoya Machinery Works, Nakamura-ku, Nagoya, Aichi Pref. (JP)
(74) Representative: Meissner, Peter E., Dipl.-Ing.

(56) References cited:
- DE-A- 2 513 660
- GB-A- 467 594

## Description

### FIELD OF THE INVENTION AND RELATED ART STATEMENT

The present invention relates to a method of processing the wash using drum type washing apparatus wherein the wash can be automatically discharged from the interior of a rotary drum in a washing/dewatering unit or a drier to which the present invention is applied.

Hitherto, the laundry industry has offered such laundry services as comprising the receiving of soiled cloths such as towels, sheets, bandages, uniforms or the like (hereinafter generally referred to as linens) from hotel, hospital or the lthe ike facilities, processing of them for the purpose of reuse and the delivering of cleaned linens to hotel, hospital or the like facilities. Steps of processing are usually divided into (1) washing, (2) dewatering, (3) drying and (4) finishing. In a case where linens such as towels or the like should be completely dried, steps (1) to (3) are required. On the other hand, in a case where linens such as sheets, bandages, uniforms or the like should be finished by ironing, steps (1) to (4) are required (It should be noted that a step (3) of drying is performed within a short period of time).

With a conventional apparatus, in general, linens are first washed and dewatered and after completion of steps of washing and dewatering the linens are conveyed to a drier in which a step of drying is performed.

The conventional apparatus in which steps of washing and dewatering are continuously performed includes a rotary drum of which wall is made of a perforated plate, and a plurality of beaters are attached to the wall of the rotary drum so that the linens are lifted up from the inner wall surface of the rotary drum as the latter is rotated. With this construction, the linen are usually washed in the presence of detergent under the influence of shock appearing over the water surface when they fall down. On completion of the step of washing, the rotary drum in turn is rotated at a higher rotational speed so that water involved in the linens is dewatered therefrom under the effect of centrifugal force generated by rotation of the rotary drum at such a high rotational speed. On completion of the step of dewatering, a laundryman stops operation of the apparatus and displaces the linens in a wagon or the like to carry them to a drier in which a next step of drying is performed. To dry the linens, a rotary drum type drier is usually employed which includes a rotary drum in which the washed and dewatered linens are dried by blowing hot air into the interior of the rotary drum. A period of time required for performing a step of drying in the rotary drum differs in dependence on the kinds of linens which are typically divided into two kinds, one of them being linens such as towels or the like which require complete drying and the other one being half-dried linens such as sheets, bandages, uniforms and so forth which are conveyed to a next shop where they are finished by ironing. Thus, a drying time is properly selected in dependence on the kinds of linens to be dried.

The above description has been generally referred to the prior art which requires that steps of washing and dewatering and a step of drying are performed using two independent units. As a special case, a so-called washing/dewatering/drying unit is already commercially sold in which steps of washing, dewatering and drying are successively performed using a single unit.

Since this type of unit is so constructed that steps of washing, dewatering and drying are performed without discontinuance, it is unnecessary that a laundryman carries linens in the course of washing operation as is the case with the separate type unit. In fact, however, the unit has the following restrictions from the viewpoint of structure, resulting in the unit failing to be widely put in practical use.
(1) When steps of washing, dewatering and drying are continuously performed in the conventional unit, a period of time required for executing these steps one after another is prolonged substantially longer than a total value of time comprising a time required by the conventional washing/dewatering unit and a time required by the drier, resulting in productibity being reduced. This is attributable to the fact that a perforation rate of the rotary drum is restricted within the range of 20 to 30 % from the viewpoint of mechanical strength of the rotary drum which should be rotated at a higher rotational speed to perform a step of continuous dewatering. Since an ordinal drier has a perforation rate of about 60 %, it is obvious that the conventional washing/dewatering apparatus has a reduced air venting efficiency compared with the drier and this leads to a result that a drying time is prolonged.
(2) After completion of the steps of washing and dewatering, it is often found that some kind of linens, e.g., towels, sheets or the like are brought in tight contact with the inner wall surface of the rotary drum. This makes it difficult to remove the linens away from the inner wall surface of the rotary drum during a period of drying, resulting in uniform drying being achieved only with much difficulties. Sometimes, there arises a necessity for interrupting operation of the unit to manually remove the linens from the inner wall surface of the rotary drum.
(3) Generally, an operation for removing the linens from the rotary drum after completion of a step of washing is a severe task which requires a high intensity of force to be given by a young laundryman. Accordingly, a request for facilitating removal operation has been raised from the laundry industry.

Now, description will be made in more details below as to structure of the rotary drum which has been used for the conventional washing/dewatering/drying unit.

A rotary drum type dewatering unit adapted to perform a step of dewatering under the effect of centrifugal force is identical to each of a washer usable in individual home, a laundry washer, a dry cleaner in which an organic solvent is used as a washing medium and a centrifugal type dewatering unit usable on the industrial base as far as a fundamental structure associated with dewatering operation is concerned. Therefore, description will be typically made with reference to a washer usable in individual home.

A method according to the preamble of claim 1 is disclosed in DE.A. 2513660 and GB.A. 467594.

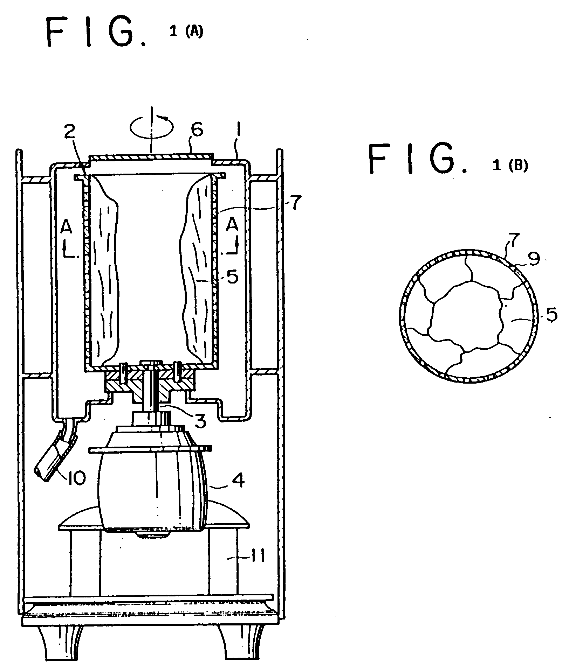

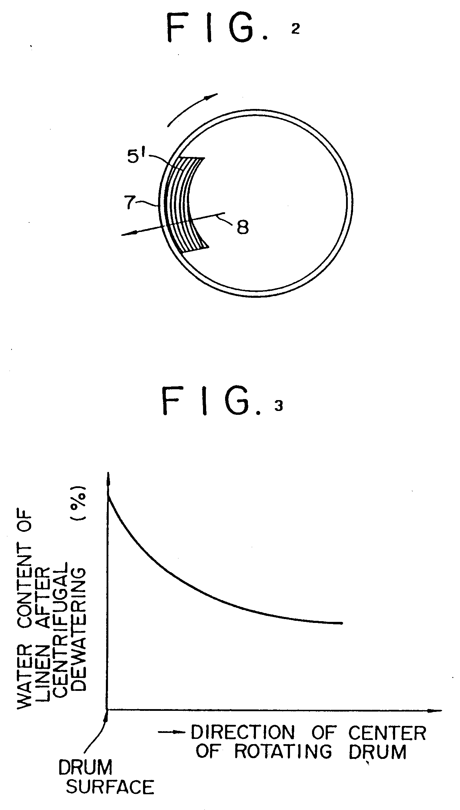

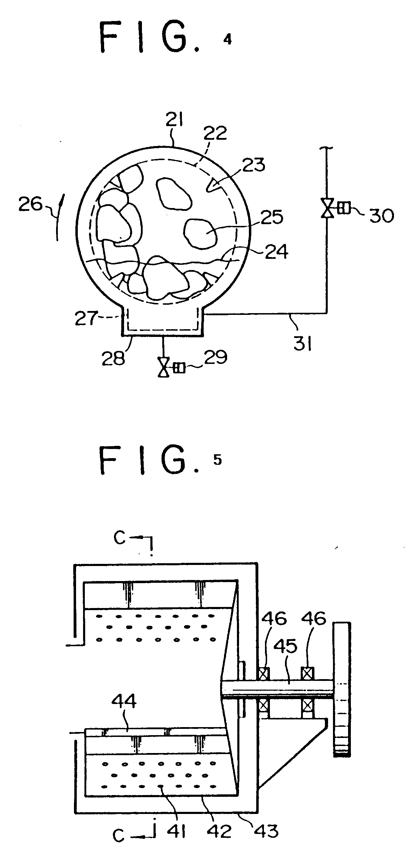

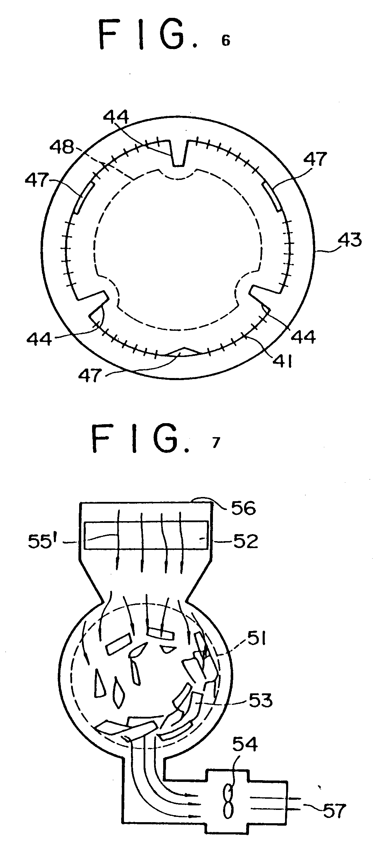

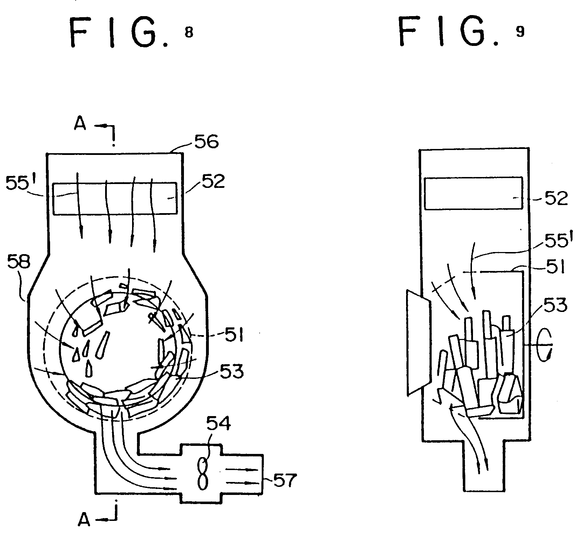

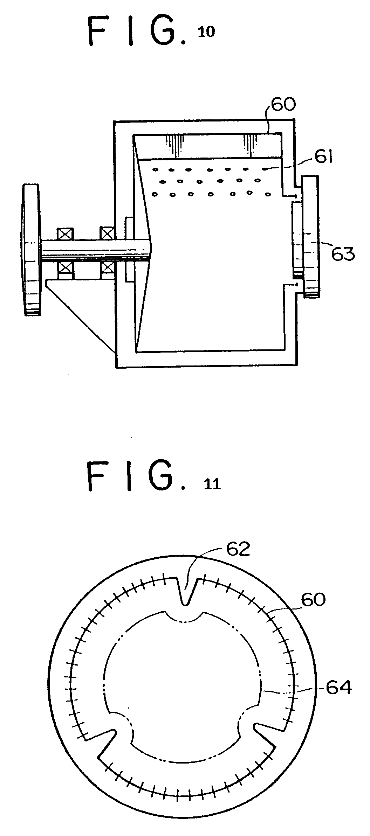

As shown in Figs. 1(A) and 1(B), a dewatering barrel 1 is composed of a rotary drum 2 of which cylindrical wall is made of a perforated plate having a perforation rate in the range of 10 to 20 %, a rotational shaft 3 adapted to support the rotary drum 2 to rotate the latter and a motor 4 for rotating the rotational shaft 3. Reference numeral 9 designates a number of holes which are drilled through the cylindrical wall 7, reference numeral 10 does a water discharge pipe attached to the bottom of the dewatering barrel 1 and reference numeral 11 does a plurality of vibration proof rubbers interposed between the motor 4 and the base platform of the washer.

After completion of a step of washing, linens 5 are introduced into the dewatering barrel 1 from a washing barrel (not shown), the dewatering barrel 1 is closed with a lid 6 and a desired period of time is then set using a timer switch (not shown). Then, the rotary drum 2 is rotated at a higher speed by the motor 2 so that water in the linens 5 is discharged through the cylindrical wall 7 made of a perforated plate of which center axis coincides with that of the rotary drum 2.

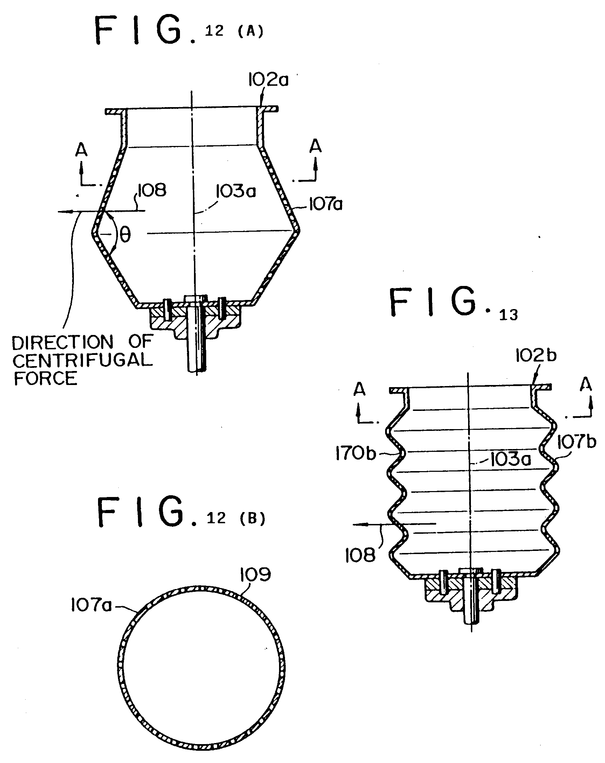

The inventors examined the prior art as mentioned above by measuring a water content of each of the linens 5' at the time when a step of dewatering is substantially completed, the linens 5' being placed round the inner wall surface of the cylindrical wall 7 in a layered structure while having an uniform thickness as viewed in the peripheral direction, as shown in Fig. 2. Results derived from the measurements reveal that the linens 5' located in the proximity of the inner wall surface of the cylindrical wall 7 has a water content about two times as much as that of the linens 5' located remote from the inner wall surface of the cylindrical wall 7, i.e., the linens 5' located near to the axis of rotation of the cylindrical wall 7, as shown in Fig. 3.

This is because of the fact that the cylindrical wall 7 extends at right angles relative to the direction of centrifugal force as is best seen in Fig. 2 so that water remaining between the linens 5 and the inner wall surface of the cylindrical wall 7 is prevented from moving along the inner wall surface of the cylindrical wall 7, resulting in the water retained therebetween failing to be discharged from the linens 5'. On the other hand, since water involved in the linens 5' located remote from the inner wall surface of the cylindrical wall 7 is caused to smoothly move through capillary tubes in the linens 5' in the direction R of centrifugal force, the result is that the linens 5' located in the proximity of the central part of the rotary drum 2 have a water content less than that of the linens 5' located in the proximity of the inner wall surface of the cylindrical wall 7, as shown in Fig. 3.

Additionally, there is a tendency that the linens 5' located in the proximity of the inner wall surface of the cylindrical wall 7 has a water content which is increased more and more as a thickness of the linens 5' is reduced. It is believed that this is attributable to the fact that the linens 5' (located remote from the inner wall surface of the cylindrical wall 7) to serve for thrusting the linens 5' located in the proximity of the inner wall surface of the cylindrical wall 7 in the direction of centrifugal force has a reduced weight, causing an effect of squeezing the water to be reduced.

As will be readily apparent from the above description, since the conventional dewatering unit is so constructed that the cylindrical wall 7 constituting the rotary drum 2 extends at right angles relative to the direction 8 of centrifugal force, it has significant drawbacks that water involved in the linens 5 located near to the inner wall surface of the cylindrical wall 7 can not be satisfactorily discharged from the rotary drum 2 and thereby a property of dewatering which can be expected in nature from an intensity of centrifugal force fails to be exhibited to satisfaction. As a result, an extra quantity of energy and time are naturally consumed for the purpose of drying the linens after completion of a step of dewatering.

Next, a step of washing to be performed with the use of a conventional unit will be described below with reference to Fig. 4 which schematically illustrates a drum type washing unit.

Specifically, Fig. 4 is a schematic sectional view illustrating the drum type washing unit which is maintained during a period of washing.

In the drawing, reference numeral 21 designates a washing barrel, reference numeral 22 does a rotary drum, reference numeral 23 does a plurality of beaters for lifting up linens 25 while the rotary drum 22 is rotated in the direction (as identified by an arrow mark 26) and reference numeral 24 does a washing water which has been introduced into the interior of the washing drum 21 via a water supply piping 31.

Reference numeral 27 designates a lint filter for catching waste threads (lints) derived from the linens 25. The lint filter 27 is accommodated in a filter box 28 having a water discharge valve 29 connected thereto.

With this construction, a water level of the washing water 24 is monitored by a water level meter (designed in a float type, a hydraulic pressure type or the like) which is not shown in the drawing, and when a predetermined quantity of water is introduced into the washing barrel 21, a water supply valve 30 is closed automatically.

The rotary drum 22 is rotated when water supply is started. It continues to be rotated for a period of time set by a timer circuit and associated components (not shown) even after the washing water 24 roaches a predetermined value of water level so that so-called beat washing is performed for the linens 25 by allowing the latter to be lifted up by the boaters 23 and then caused to fall down. After completion of the step of washing, the water discharge valve 29 is opened whereby waste washing water 24 is discharged from the rotary drum 22 to the outside while flowing through the filter 27.

As described above, according to the conventional method of washing the linens 25 using a rotary drum, the linens 25 are washed by repeatedly lifting up them by the boaters 23 and then causing them to fall down by their own dead weight. This allows an upper limit of the number of revolutions of the rotary drum 22 to be defined in the range of 0.7 to 0.8 G which is represented in terms of a gravity acceleration. If the rotary drum 22 is rotated at a higher speed as represented by more than 1 G, the linens 25 are brought in tight contact with the inner wall surface of the rotary drum 22 with the result that the linens 25 can not fall down, causing an effect of washing operation to be reduced remarkably.

It is obvious from the viewpoint of an effect of washing operation that the number of drops of the linens 25 can be increased more and more by increasing the number of revolutions of the rotary drum as far as possible with the result that an effect of agitation can be increased remarkably accompanied by an improved property of washing or a reduced time required for performing a step of washing. However, the number of revolutions of the rotary drum can not be set to a high level in excess of 1 G for the foregoing reasons and this offers a significant obstruction appearing when a washing time is to be shortened.

Next, a conventional step of dewatering will be described below with reference to Figs. 5 and 6 which schematically illustrate structure of a rotary drum.

As shown in Fig. 5, the washing/dewatering unit includes a rotary drum 42 of which cylindrical wall is formed with a number of communication holes 41, and a plurality of beaters 44 (three beaters in the illustrated case) are attached to the inner wall surface of the rotary drum while projecting in the inward direction. In the drawing, reference numeral 45 designates a main shaft for supporting the rotary drum and reference numeral 46 does bearings for rotatably supporting an assembly of the rotary drum 42 and the main shaft 45.

With such washing/dewatering unit, linens to be washed are introduced into the interior of the rotary drum 42 to be washed and after completion of the step of washing, rinsing operations are performed by several times so that the process goes to a step of dewatering to be performed by rotating the rotary drum 42 at a higher rotational speed. It should be noted that during a period of dewatering there may arise a difficult problem that the linens can not be removed from the rotary drum 42 because the latter are brought in tight contact with the inner wall surface of the rotary drum 42 due to penetration of a part of the linens into the communication holes 41 during rotation of the rotary drum at a high rotational speed.

To obviate the foregoing problem, there have been already raised a variety of proposals for preventing the linens from coming in tight contact with the inner wall surface of the rotary drum 42. One of the proposals is such that a plurality of tight contact prevention plates 47 having an adequate configure and dimensions are secured to a part of the inner wall surface of the rotary drum located between the adjacent beaters 44. As is best seen in Fig. 6 , the tight contact prevention plates 47 may be designed either in the form of a flat plate as seen on the side walls or in the form of a hill-shaped member as seen on the bottom side of the rotary drum 42.

According to this proposal, since each of the tight contact prevention plates 47 is secured to a part of the inner wall surface of the rotary drum 42 between the adjacent beaters 44, no penetration of a part of the linens 48 into the communication holes 41 takes place during a period of dewatering because the communication holes 41 located at a part between the adjacent beaters 44 and a part of the inner wall surface of the rotary drum 42 occupied by the tight contact prevention plate 47 are covered with the boaters 41 and the tight contact prevention plate 47. Thus, washing water in the linens 48 is discharged from the rotary drum 42 only through other communication holes 41. This makes it possible to easily remove the linens 48 from the interior of the rotary drum 42 while slowly turning the latter because no penetration of a part of the linens 48 into the communication holes 41 takes place at a part between the adjacent boaters 44 and a part of the inner wall surface of the rotary drum 42 occupied by the tight contact prevention plate 47 as mentioned above, although some part of the linens 48 is penetrated into the communication holes 41 at an area where that latter are not closed with the boaters 44 and the tight contact prevention plates 47.

After completion of the step of washing, the process goes to a next step of dewatering during which washing water involved in the linens 48 is separated therefrom by rotating the rotary drum 42 at such a higher rotational speed that causes a high intensity of centrifugal force (represented, e.g., by 300 G) to be generated. This permits a part of the linens 48 to be penetrated into the communication holes 41 under the effect of the centrifugal force generated in that way whereby the linens are brought in tight contact with inner wall surface of the rotary drum 42.

To prevent the linens from coming in tight contact with the inner wall surface of the rotary drum 42, there was made the above-mentioned proposal that some part of the communication holes 41 are closed with a plurality of tight contact prevention plates 47 so that the linens 48 can be easily removed from the inner wall surface of the rotary drum 42. In spite of the fact that a principal object of the step of dewatering is to discharge washing water through the communication holes 41, however, the above proposal is achieved by closing a part of the communication holes 41 with a dewatering rate being reduced to some extent, in order to prevent the linens 49 from being brought in tight contact with the inner wall surface of the rotary drum. Accordingly, a large quantity of energy is required in correspondence to a degree of reduction of the dewatering rate for performing a subsequent step of drying.

Next, a conventional step of drying will be described below with reference to Figs. 7 to 9.

Figs. 7 to 9 are a schematic view of a conventional drier or washing/dewatering/drying unit, respectively, particularly illustrating the flowing of a hot air in the surrounding area of a rotary drum.

First, description will be made with reference to Fig. 7 as to a step of drying.

In the drawing, reference numeral 51 designates a rotary drum, reference numeral 52 does an air heater comprising a steam jacket or the like, reference numeral 53 does linens and reference numeral 54 does a suction type blower adapted to suck a hot air 55' and then discharge it from the drying system to the outside.

According to the illustrated arrangement, the hot air 55' which has moved through the air heater 52 via an air intake port 56 disposed above the rotary drum 51 is sucked, it is then introduced into the interior of the rotary drum 51 through the holes on the wall of the rotary drum 51 while flowing round the outer wall surface of the latter until it comes in contact with the linens 53 and thereafter it is discharged to the outside via a suction type blower 54 and an exhaust port 57 situated below the rotary drum 51. A characterizing feature of this arrangement consists in that hot air flows in the form of a so-called laminar flow having a number of streaming lines aligned with each other, which is inherent to the suction type air flowing.

Next, description will be made further with reference to Fig. 8 as to the step of drying. The unit shown in Fig. 8 is substantially similar to that in Fig. 7 in structure. As is apparent from Fig. 9 which is a sectional side view of the unit, the latter includes a hot air distributing box 58 located above the rotary drum 51 so that the hot air 55' is positively introduced into the rotary drum 51 from the front part of the upper half of the latter to flow uniformly within the interior of the rotary drum 51. This arrangement exhibits an effect of laminar flow more clearly than in the case as shown in Fig. 7.

As will be readily apparent from the above description, a main feature of the conventional suction type arrangement consists in employment of the suction blower 54 which assures that the hot air 55' is introduced into the rotary drum 51 in the form of a laminar flow and thereby the linens 53 which have been lifted up in the rotary drum 51 as the the latter is rotated are dried in a floated state.

In this manner, the conventional unit employs the suction type arrangement to bring hot air into the rotary drum so that the hot air flows in the form of a so-called laminar flow. Usually, an average flowing speed of the hot air is determined in the range of 1 to 5 m/sec. In an extreme case, it has the maximum flowing speed less than 5 m/sec.

With this construction, to assure that linens are effectively brought in contact with hot air within the interior of the rotary drum, it is necessary that the number of revolutions of the rotary drum is determined in the range of 0.7 to 0.8 G in terms of a gravity acceleration and the linens are floated in the atmosphere including hot air in the form of a laminar flow. If the rotary drum is rotated at a higher rotational speed as represented by more or less 1 G or in excess of 1 G, the result is that the linens are brought in tight contact with the inner wall surface of the rotary drum, causing them to be dried only with much difficulties. In other words, an opportunity for allowing a mass of linens located at the lower part of the rotary drum to be floated in hot air as the rotary drum is rotated is obtainable with the highest possibility when the rotary drum is rotated at a rotation speed which remains in the range of 0.7 to 0.8 G. Thus, if the rotary drum is rotated at a lower speed, the result is that the above opportunity is obtainable with a reduced possibility.

Further, since an average flowing speed of the hot air is maintained at a low level of 1/2 m/sec, a relative speed of the hot air to the linens can not be set to a high level. Strictly speaking, discharging of water vapor produced from the linens is achieved with a delay corresponding to reduction of the relative speed of hot air to the linens.

For the foregoing reasons, an average drying time is usually set in the range of 30 to 40 minutes in accordance with the conventional suction type drying manner. Accordingly, a request for a drier which assures that a drying time can be shortened substantially compared with the conventional drying manner has been raised from the laundry industry.

On the other hand, the conventional drying manner is performed such that linens which have been washed and dewatered are introduced into the rotary drum and the latter is then rotated at a rotational speed under a condition of the centrifugal acceleration as represented by less than 1 G in terms of a gravity acceleration appearing round the inner wall surface of the rotary drum. Thereafter, the linens are lifted up away from the inner wall surface of the rotary drum by activating the boaters attached to the inner wall surface of the rotary drum and they are then caused to fall down by their own dead weight so that they are dried by blowing hot air into the interior of the rotary drum.

To this end, the rotary drum requires a sufficient volume of space in which linens can move freely while they remain within the interior of the rotary drum. Generally, a space about two times as wide as the space set for performing the preceding step of dewatering is required for performing a step of drying. Accordingly, a conventional fully automatic washing/dewatering/drying unit including a single rotary drum in which steps of washing, dewatering and drying are successively performed requires a volume of space two times as large as that of the conventional washing/dewatering unit, causing a manufacturing cost required for manufacturing the unit and dimensions determined for the same to be increased substantially.

Here, for the purpose of reference, description will be made below as to a calculation standard (provided by Japan Industrial Machinery Manufacturer Association) for a standard quantity of load to be carried by a washing/dewatering unit for a laundry shop.$\text{standard quantity of load to be borne Q = f·} \frac{\text{1}}{\text{4}} {\text{πD}}^{\text{2}} \text{L}$ where f designates a load rate in Kg/m³ wherein f is represented by 45 + 30 D in a case of a washing/dewatering unit and it is represented by 40 in a case of a drier, D does an inner diameter of the rotary drum in meter and L does a inner length of the rotary drum in meter.

The inner length of the rotary drum represents a dimension which is determined such that linens can be introduced into and removed from the rotary drum. Concretely, it is determined in the range of 1.0 to 1.3 m in a case where the rotary drum is charged with a normal quantity of load of 30 Kg. In this case, a drier has a volume of space as represented by a ratio of 1.875 to 2.1 compared with that of the washing/dewatering unit.

If an excessive quantity of load more than the above standard quantity of load is introduced into the rotary drum of the conventional washing/dewatering unit during a step of drying, it has been confirmed that linens are dried with fluctuation in degree of dryness from location to location as viewed round the inner wall surface of the rotary drum due to immovability of the linens within the interior of the rotary drum and moreover the linens require a long drying time in comparison with the quantity of load. Another problem is that if the linens are excessively dried to eliminate the fluctuation in degree of dryness, they tend to have a remarkably reduced period of running life.

Next, description will be made below as to discharging of linens, i.e., removal of the same.

As shown in Figs. 10 and 11, a conventional washing/dewatering unit in which steps of washing and dewatering are successively performed includes a rotary drum 60 of which cylindrical wall is made of a perforated plate 61, and a step of washing is performed in such a manner that linens are repeatedly lifted up by activating a plurality of beaters 62 as the rotary drum is rotated and they are then repeatedly caused to fall down by their own dead weight. When the step of washing is terminated, the rotary drum 60 is rotated at a higher speed so as to allow the linens to be dewatered. On completion of the step of dewatering, an operator stops rotation of the washing/dewatering unit and then opens a door 63 to manually remove from the interior of the rotary drum 60 the linens which have been brought in tight contact with the inner wall surface of the rotary drum under the influence of centrifugal force. Thereafter, he discharges the wet linens from the rotary drum to the outside and then puts them in a wagon or the like means to carry them to a drier.

Thereafter, he opens a door of the drum type drier to introduce the linens into a rotary drum so that they are dried by blowing hot air into the interior of the rotary drum while the latter is rotated.

After he confirms that the linens have been completely dried, he stops operation of the drier, opens the door, manually removes the linens from the interior of the rotary drum and then puts them in a wagon or the like means to carry them to a next step.

As described above, when linens are to be processed in the conventional washing/dewatering unit, they are introduced into the rotary drum and after completion of steps of washing and dewatering, they are manually removed from the interior of the rotary drum. Since the linens are brought in tight contact with the inner wall surface of the rotary drum under the effect of centrifugal force generated by rotation of the linens at a higher speed during a step of dewatering in dependence on the kind of linens, removal of the linens from the interior of the rotary drum after completion of the step of dewatering is a severe task which usually requires a high magnitude of power to be given by a young man.

When the linens are removed from the interior of the rotary drum, it is hardly found that they have been brought in tight contact with the inner wall surface of the rotary drum. However, it is necessary that an operator stoops to extend his hands into the interior of the rotary drum or in some case it is required that he removes the linens therefrom while allowing an upper half of his body to be exposed to the hot atmosphere in the interior of the rotary drum. To eliminate the foregoing inconvenience, a technique for removing linens from the rotary drum after completion of the step of drying was already proposed in Japanese Utility Model Application NO. 19266/1980. This technique is embodied in the form of an apparatus which is so constructed that an inlet port through which wet linens are introduced into the rotary drum is situated on the front door side and an outlet port through which dried linens are removed therefrom is situated on the rear door side. However, with this construction, the whole apparatus tends to be designed in larger dimensions.

As is apparent from the above description, operation for removing linens from the interior of the rotary drum is a hard task which is disliked by anybody. Accordingly, a request for improving such severe task of removing linens from the rotary drum has been raised from the laundry industry.

Now, with the foregoing background in mind, subjects to be solved will be summarized in the following.

To successively perform steps of washing, dewatering and drying, it is necessary that a period of time required for performing the respective steps is substantially shortened and linens can be easily removed away from the inner wall surface of a rotary drum after completion of the step of drying. Particularly, to shorten a period of time required for performing steps of washing, dewatering and drying, the following items should be improved.

### (1) Reduction of a time required for the step of washing:

It is advantageous from the viewpoint of an effect of washing that the number of revolution of rotary drum is increased as far as possible to increase the number of drops of linens so that an effect of agitation is increased substantially accompanied by an improved property of washing or a reduced washing time. However, since the number of revolutions of a rotary drum can not be set to a level in excess of 0.8 G for the aforementioned reasons, this offers a significant obstruction when a washing time is to be shortened.

### (2) Reduction of a time required for the step of dewatering:

A conventional dewatering unit is usually constructed that the inner wall surface of a rotary drum extends at right angles relative to the direction of centrifugal force (while a so-called corrugation angle exhibits 180°). This construction leads to a significant drawback that water involved in linens located in the proximity of the inner wall surface of the rotary drum is not satisfactorily removed therefrom and moreover a property of dewatering to be naturally derived from an intensity of centrifugal force is not exhibited to the satisfaction of an operator. Consequently, an extra amount of energy and time are consumed for the purpose of drying linens after completion of the step of dewatering.

### (3) Reduction of a time required for the step of drying:

Hot air is heretofore introduced into a rotary drum in accordance with the air suction manner. The hot air moves in the rotary drum in the form of a so-called laminar flow of which average flowing speed is determined in the range of 1 to 2 m/sec. Even when it is to flow at the highest speed, the flowing speed is set to a level less than 5 m/sec.

To assure that linens comes in contact with hot air at a high efficiency within the interior of the rotary drum, it is necessary that the number of revolutions of the rotary drum is determined in the range of 0.7 to 0.8 G in terms of a gravity acceleration and the linens are floated in the laminar flow of hot air as long as possible. If the number of revolutions of the rotary drum is set to a level of more or less 1 G or in excess of 1 G, the result is that the linens are brought in tight contact with the inner wall surface of the rotary drum and thereby drying is achieved only with much difficulties. In other words, an opportunity for allowing a mass of linens located at the lower part of the rotary drum to be floated in the hot air as the rotary drum is rotated is maximized when the umber of revolutions of the rotary drum is determined in the range of 0.7 to 0.8 G represented by a gravity acceleration. If the rotary drum is rotated at a rotational speed lower than the foregoing range, the result is that the above opportunity is adversely reduced.

Further, since an average speed of hot air remains at a a low level of 1/2 m/sec, a relative speed of the linens to the hot air can not be set to a high level. Strictly speaking, removing of water vapor evaporated from the linen layer is achieved with a delay corresponding to the reduced relative speed.

For the aforementioned reasons, an average drying time is set in the range of 30 to 40 minutes in accordance with the conventional suction manner. Accordingly, a request for developing a drier adapted to remarkably shorten the average drying time has been raised from the laundry industry.

### (4) Easy removal of linens from a rotary drum

As mentioned above, operation for removing linens from a rotary drum is a severe task which is disliked by anyone. Accordingly, a request for improving the removing operation has been also raised from the laundry industry.

### OBJECTS AND SUMMARY OF THE INVENTION

The present invention has been made with the foregoing problems in mind and its principal object resides in providing a method of processing the wash using a drum type washing apparatus which assures that an operator is released from the hard operation for removing the wash from the apparatus, i.e., discharge operation.

The present invention provides a method of processing linens using a drum type washing apparatus including a rotary drum made of a perforated plate to perform at least one step among steps of washing, dewatering and drying linens in the rotary drum, wherein the rotary drum is rotatably supported within an outer drum, the apparatus is provided with a door so as to allow the linens to be introduced into the interior of the rotary drum or discharged therefrom while the door is kept opened, the door being located on the axis of rotation of the rotary drum, the outer drum is provided with an air blowing duct for allowing air to be blown toward the rotary drum therethrough, and after completion of a step of dewatering or after completion of a step of drying, the rotary drum is rotated and at the same time air is blown into the interior of the rotary drum through the duct while the door is kept opened so that the linens in the rotary drum is discharged therefrom to the outside via the door under the effect of force generated by flowing of the air.

Moreover, the present invention provides a method of processing linens using a rotary type washing apparatus including a rotary drum made of a perforated plate to perform at least one step among steps of of washing, dewatering and drying linens in the rotary drum, wherein the rotary drum is rotatably supported within an outer drum, the apparatus is provided with a door so as to allow the linens to be introduced into the interior of the rotary drum or discharged therefrom while the door is kept opened, the door being located on the axis of rotation of the rotary drum, the outer drum is provided with an air blowing duct for allowing air to be blown toward the rotary duct therethrough and an air discharging duct for allowing the waste air to be discharged from the rotary drum to the outside therethrough, the air discharging duct having a damper attached thereto, and after completion of a step of dewatering or after completion of a step of drying, the damper is closed, the rotary drum is then rotated and at the same time air is blown into the interior of the rotary drum through the air blowing duct while the door is kept opened (but the damper is kept closed) so that the linens in the rotary drum are discharged therefrom to the outside via the door under the effect of force generated by flowing of the air.

According to the characterizing features of the present invention, as the rotary drum is rotated, linens are lifted up away from the inner wall surface of the rotary drum by activating the bearers and they are then caused to fall down by their own dead weight when they are usually lifted up to a level in the angular range of 10 o'clock to 12 o'clock represented by the short pointer of a clock in a case where the rotary drum is rotated in the clockwise direction. At this moment, the door concentrically located at the central part of the rotary drum is kept opened so that air is blown toward the linens from the outer drum. This permits the linens which have been lifted up in the rotary drum in that way to be easily discharged to the outside under the effect of force (air force) generated by flowing of the air from the rotary drum to the outside.

As will be readily apparent from the above description, linens in the rotary drum can be discharged therefrom to the outside under the influence of force generated by flowing of the air whereby removal of the linens can be easily achieved by a laundrywoman. Thus, there does not arise a problem that a young laundryman having a high intensity of power should be employed for removal of the linens from the rotary drum as is the case with the conventional method. In addition, according to the method of the present invention, a period of time required for removal of the linen can be reduced to a level of less than 1/4 of that in the conventional method. For example, in a case where 50 Kg of lines are removed from the rotary drum, the conventional method requires a time longer than 3 minutes due to tight contact of the linens with the inner wall surface of the rotary drum after completion of a step of dewatering. In contrast with the conventional method, the method of the present invention requires only a time shorter than 0.5 minute. Further, the conventional method is practiced in such a manner that linens (particularly, bathrobe, shirt or the like) are removed from the rotary drum by manual pulling operation, resulting in the linens being often injured or damages during a period of removal of the linen. In contrast with the conventional method, the method of the present invention does not suffer from such a problem, because no manual pulling operation is required for removing the linens.

### BRIEF DESCRIPTION OF THE DRAWINGS

The present invention will be illustrated in the following drawings in which:
Fig. 1(A) is a sectional side view of a conventional drum type drier.
Fig. 1(B) is a cross-sectional view of the drier in Fig. 1(A).
Fig. 2 is a schematic cross-sectional view of the drier similar to Fig. 1(B), particularly illustrating how the linen layer comes in contact with the inner wall surface of the rotary drum during a period of testing with respect to a period of dewatering.
Fig. 3 is a graph illustrating distribution of a water content during the period of testing as shown in Fig. 2
Fig. 4 is a cross-sectional view schematically illustrating conventional drum type washing apparatus.
Fig. 5 is a sectional side view illustrating another conventional drum type washing apparatus.
Fig. 6 is a cross-sectional view of the apparatus taken in line C - C in Fig. 5.
Figs. 7 and 8 are a sectional side view schematically illustrating essential components constituting another drum type washing apparatus, respectively.
Fig. 9 is a sectional side view of the apparatus taken in A - A in Fig. 8.
Fig. 10 is a sectional side view of another conventional drum type washing apparatus, and
Fig. 11 is a front view of the apparatus in Fig. 40.
Figs. 12 to 16 illustrate a drum type washing apparatus in accordance with a first embodiment of the present invention, respectively.
Fig. 12(A) is a vertical sectional view of a rotary drum usable for the apparatus in Fig. 12.
Fig. 12(B) is a cross-sectional view of the rotary drum taken in line A - A in Fig. 12(A).
Fig. 13 is a vertical sectional view of a rotary drum in accordance with a modified embodiment from the rotary drum in Fig. 12
Fig. 14(A) is a vertical sectional view of a rotary drum in accordance with other modified embodiment.
Fig. 14(B) is a cross-sectional view of the rotary drum taken in line A - A in Fig. 14(A).
Fig. 15 is a cross-sectional view of a rotary drum in accordance with another modified embodiment.
Fig. 16 is a graph illustrating distribution of a water content as viewed toward the central part of the rotary drum with respect to both the apparatus of the present invention and a conventional apparatus.
Figs. 17 to 21 illustrate a drum type washing apparatus in accordance with a second embodiment of the present invention, respectively.
Fig. 17(A) is a sectional view illustrating by way of sectional view essential components constituting the apparatus of the present invention.
Fig. 17(B) is a sectional view schematically illustrating how linens are brought in contact with the inner wall surface of the rotary drum shown in Fig. 17(A).
Fig. 18 is a schematic view illustrating a drum type washing apparatus in accordance with a modified embodiment from the embodiment in Fig. 17.
Fig. 19 is a graph illustrating a relationship between a corrugation angle of the rotary drum and a water content in the linen layer.
Fig. 20 is a graph illustrating a relationship between a corrugation angle of the rotary drum and a peeling force as represented by indexes.
Fig. 21 is a graph illustrating distribution of a water content as viewed toward the central part of the rotary drum.

### DETAILED DESCRIPTION OF THE PREFERRED EMBODIMENTS

Now, the present invention will be described in a greater detail hereinafter with reference to the accompanying drawings which illustrate preferred embodiment thereof.

### (First Embodiment)

First, description will be made below with reference to Figs. 12 to 15 as to a first embodiment of the present invention.

Figs. 12 to 15 illustrate four different types of embodiments associated with the first embodiment of the present invention.

Specifically, Fig. 12(A) is a sectional side view of a dewatering drum taken along the axis of a driving shaft and Fig. 12(B) is a cross-sectional view of the dewatering drum taken in line A - A in Fig. 12(A).

As will be apparent from the drawings, the dewatering drum 102a in accordance with this embodiment exhibits a circular contour as viewed in the horizontal cross-sectional plane located at any position in the vertical direction and it is so configured that a wall 107a as viewed in the vertical sectional view taken along an axis line 103a of rotation extends while defining a predetermined angle relative to the axis line 103a of rotation. In the illustrated embodiment, the whole dewatering drum 102a exhibits a pot-shaped contour which is increasingly expanded toward the middle part thereof as viewed in the vertical direction.

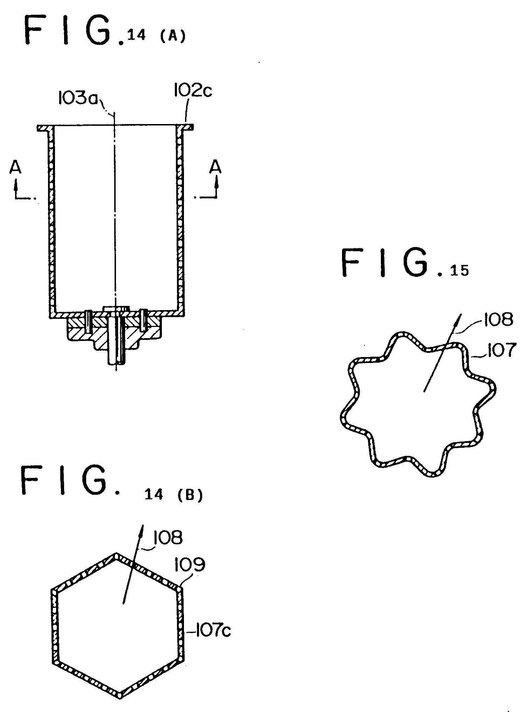

An embodiment shown in Fig. 13 is a modified embodiment from the embodiment in Fig. 12. The wall surface 107b of the dewatering drum 102b is alternately formed with a plurality of expanded parts and a plurality of constricted parts so that a number of holes 170b are drilled round apex surfaces of the respective expanded parts as well as round bottom surfaces of the respective constricted parts.

With respect to the dewatering drums 102a and 102b shown in Figs. 12 and 13, the direction 108 of centrifugal force intersects the wall 107a, 107b at right angles as viewed in the peripheral direction but the wall 107a, 107b extends in the vertical direction while defining a predetermined angle relative to the direction 108 of centrifugal force. With this construction, although liquid in the drum comes in close contact with the wall 107a, 107b under the influence of centrifugal force during a period of dewatering, an extra quantity of centrifugal force acts on the liquid so that the latter is easy to move along the wall until it reaches the holes to be discharged outwardly of the dewatering drum.

Fig. 14 illustrates a dewatering drum in accordance with another embodiment wherein Fig. 14(A) is a sectional side view and Fig. 14(B) is a cross-sectional view of the dewatering drum. As will be apparent from the drawings, the dewatering drum 102c has a wall 107c which exhibits a hexagonal column-shaped contour. A large number of holes 109 are drilled through respective apex portions and flat plane portions on the wall 107c. Consequently, the direction 108 of centrifugal force intersects the wall 107c at right angles and the latter extends while defining a predetermined angle as viewed in the direction of rotation so that liquid in the dewatering drum 102c is easy to move on the wall 107c in the direction of rotation, resulting in dewatering being smoothly achieved in the same manner as in the foregoing embodiments.

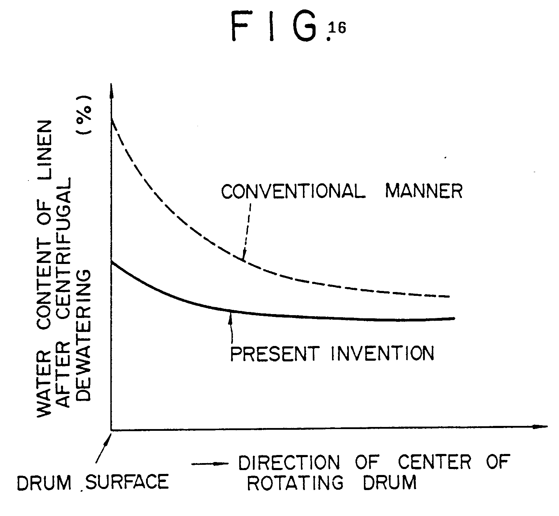

Fig. 15 illustrate a modified embodiment from the embodiment shown in Fig. 14 in which the wall 107d as viewed in the horizontal cross-sectional plane exhibits a gear tooth-shaped contour. A large number of holes are formed on apex parts and bottom parts of the wall 107c as viewed in the vertical direction. In the preceding embodiment as shown in Fig. 14, the dewatering drum has a small amount of area where the wall 107c intersects the direction 108 of centrifugal force at right angles but in this embodiment, the whole wall 107c does not intersects the direction 108 of centrifugal force at right angles as viewed in the direction of rotation. This enables dewatering to be achieved more effectively than in the preceding embodiment.

Fig. 16 shows results derived from a number of dewatering tests which were conducted using an apparatus of the present invention in accordance with the substantially same method as mentioned above. A solid line represents results obtained with the apparatus of the present invention, whereas a dotted line does results obtained with a conventional apparatus.

As will be readily understandable form the drawing, the apparatus of the present invention assures that dewatering is satisfactorily performed even for linens (articles to be washed are hereinafter typically represented by linens)located in the proximity of the inner wall surface. Since the diagram shows that a water content of the linens after after completion of dewatering is distributed toward the center of a rotary drum with few fluctuation, this means that an effect of the dewatering has been increased as a whole.

### (Second Embodiment)

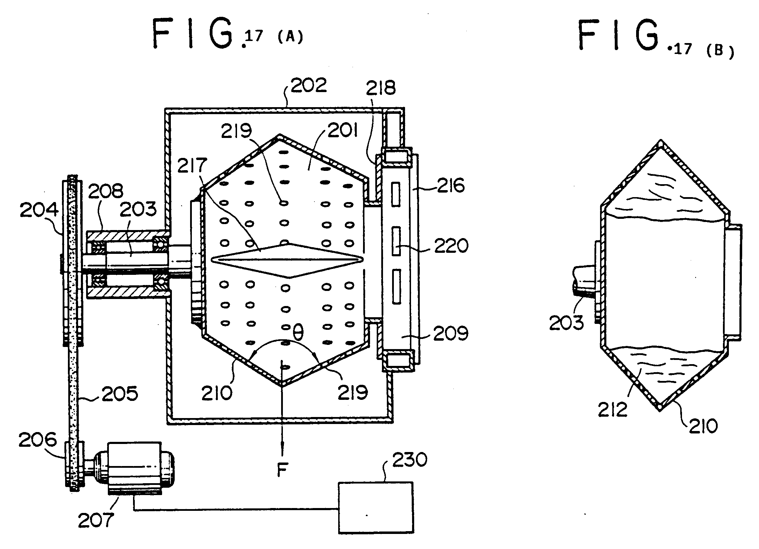

Figs.12 and 17 illustrate a second embodiment of the present invention.

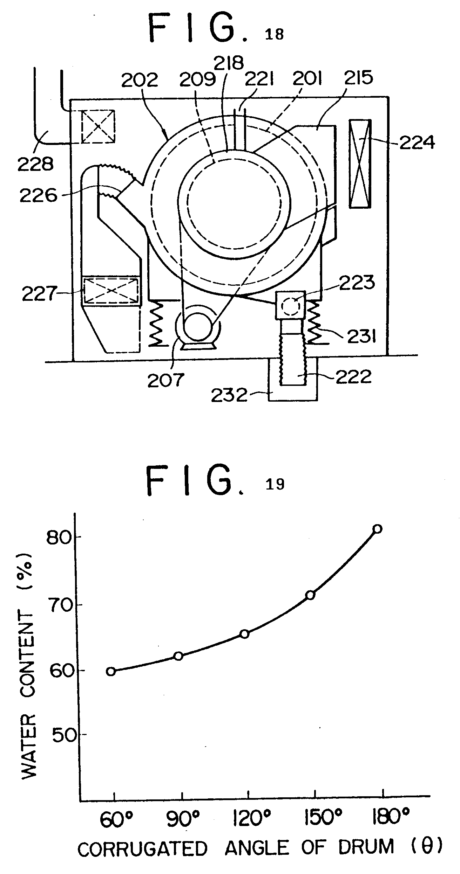

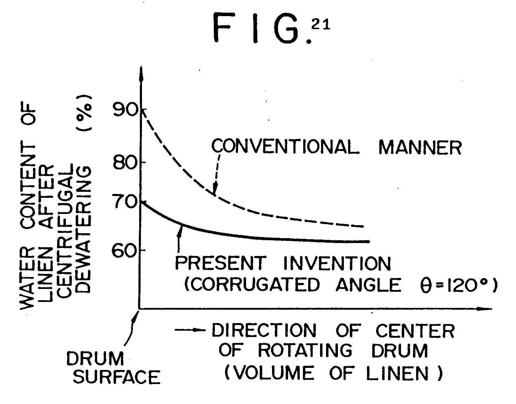

Referring to Fig.12, the wall 107a of the dewatering drum 102a extends while defining a so-called corrugation angle θ (as shown in Fig.12(A)) relative to the direction 108 of centrifugal direction. Figs.19 and 21 show data derived from a number of measurements which were conducted for determining the residual water content in the linen layer while the corrugation angle θ was varied. In fact, they represent values obtained when the linens were dewatered for 4 minutes under a condition of 350 G. Here, the rotational acceleration as identified by G can be calculated in accordance with the following formula.$\text{G =} \frac{\text{R}}{\text{9.8}} \text{X (} \frac{\text{2πn}}{\text{60}} {\text{)}}^{\text{2}}$ where R represents a radius of the dewatering drum in meter and n does the number of revolutions of the dewatering drum in rpm.

As shown in Fig.19, when the corrugated angle θ is set to 180° as is the case with a conventional flat plate type apparatus, the linen layer has a water content of 80 % and when it is set to 120°, it has a water content of 65 %. This means that the apparatus of the present invention can remove water from the linen layer by a quantity of 15 % more than in the case of the flat plate type conventional apparatus. Further, when the corrugated angle is set to 60°, the linen layer has a water content of 60 %. This means that the apparatus of the present invention can improve a property representative of water content by 20 % more than the conventional apparatus.

On the other hand, as shown in Fig. 21, the apparatus of the present invention assures that the linen layer located in the proximity of the inner wall surface of the dewatering drum can be sufficiently dewatered and a water content after completion of dewatering is distributed toward the center of the rotary drum with less fluctuation. Accordingly, an effect of the dewatering has been increased as a whole with the apparatus of the present invention.

In contrast with the apparatus of the present invention, the dewatering drum of the conventional apparatus exhibits a large amount of difference in water content between the inner wall surface and the central part thereof. The drawing shows that the conventional apparatus generally exhibits a high water content in such a manner that the linen layer has a water content 90 % along the inner wall surface and it has a water content of 65 % around the central part.

However, when the corrugation angle ϑ of the dewatering drum is set to 120°, the linen layer has a reduced amount of difference in water content between the inner wall surface and the central part of the dewatering drum in such a manner as to have a water content of 70 % along the inner wall surface and a water content of 63 % around the central part. It should be added that the linen layer has a small amount of water content as a whole and thereby it can be dewatered at a high efficiency.

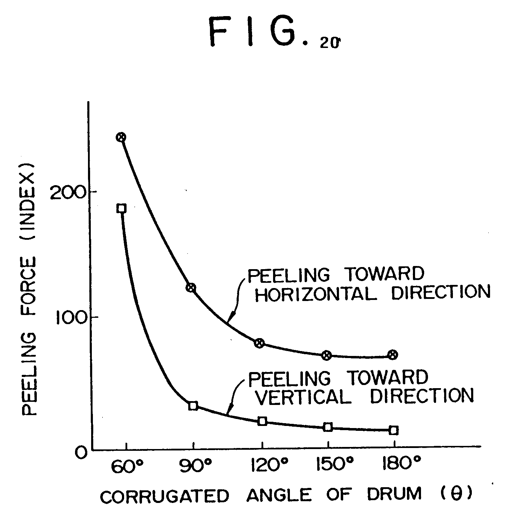

Fig. 20 shows that the linen layer is brought in close contact with the inner wall surface of the dewatering drum when the corrugation angle ϑ of the dewatering drum is varied to decrease and moreover it represents in terms of an index a magnitude of peeling force required for removing the linen layer from the wall surface.

In more details, in a case where the corrugated angle is set to 180° (as is the case with the conventional dewatering drum), a peeling force represented by about 10 indexes is required when the linen layer is removed from the inner wall surface in the vertical direction which intersects the direction of centrifugal force toward the inner wall surface of the dewatering drum by right angles (peeling in the vertical direction). When the linen layer is removed therefrom with a peeling force in the horizontal direction which intersects the direction of centrifugal direction also at right angles (peeling in the horizontal direction), it is difficult to remove it in the horizontal direction due to a number of holes 109 drilled through the wall so as to allow water to be discharged therethrough, because it is penetrated into the holes to fill the latter with the linens. In this case, a peeling force as represented by about 70 indexes is required to remove the linen layer from the inner wall surface. When the corrugation angle is set to a smaller angle, e.g., 60°, a peeling force required for removing the linen layer is increase to a level of about 200 or more indexes, e.g., 180 indexes (peeling in the vertical direction) and 240 indexes (peeling in the horizontal direction) in the case shown in the drawing. This causes the linen layer to come in tight contact with the inner wall surface of the dewatering drum. Thus, the linen layer can not be removed therefrom unless a high intensity of force is imparted to it from the outside. Accordingly, the apparatus become impracticable.

To improve a property of water content and suppress an occurrence of tight contact of the linen layer with the inner wall surface of the dewatering drum in view of the foregoing problem, it has been found that the corrugation angle θ should be determined in the range of 90° to 160°, preferably 120° to 150° from the viewpoint of practicability.

Next, description will be made below with reference to Figs. 17 and 18 as to an embodiment wherein steps of washing, dewatering and drying are successively performed using an apparatus including the following components.
201 : rotary drum --- --- This is a cylindrical rotary drum which is rotatably supported while a rotational shaft 203 is held in a substantially horizontal state. The rotary drum 201 is driven via a power transmission system comprising a pulley 204 fixedly mounted on the rotational shaft 203, a V-shaped driving belt 205 and a driving pulley 206 fixedly mounted on the output shaft of a motor 207. A number of holes 219 through which air and water flow are formed over the drum wall 210.
202 : outer drum --- --- This is arranged outside the rotary drum 201. A drum support 208 comprising a bracket, bearings and so forth is secured to the outer drum 202 at one side of the latter to support the rotational shaft 203. Further, a blowing section 209 for introducing water, steam, hot air and so forth into the interior of the rotary drum 201 is immovably provided on the other side of the rotary drum 201.
203 : rotational shaft --- --- This is fixed to the rotary drum 201 so that it serves as a drum driving shaft.
204 : pulley --- --- This is a pulley for driving the rotary drum 201, which is fixedly mounted on the rotational. shaft 203.
205 : belt --- --- This is a belt for transmitting a driving force to rotate the rotary drum 201.
206 : pulley --- --- This is fixedly mounted on the output shaft of a motor 207 so that a rotational force generated by the motor 207 is transmitted to the rotational shaft 203 via the pulley 206, the belt 205 and the pulley 204.
207 : motor --- --- This is a power supply source for driving the rotary drum 201. The number of revolutions of the motors 207 is determined by a speed changing unit 230.
208 : drum support --- --- This comprises a bracket, bearings an so forth so that the rotational shaft 203 is rotatably supported for the rotary drum 201.
209 : blowing section --- --- This is secured to the inlet portion of the outer drum 202 so as allow water, steam, hot air and so forth to be introduced into the interior of the rotary drum 201. It has a ring-shaped contour and it is formed with a plurality of openings 201 round the inner peripheral surface. It is so constructed that water, steam and heating medium such as hot air or the like which have been introduced in that way do not leak from the rotary drum 201.
210 : drum wall --- --- This is a peripheral part of the rotary drum 201. A number of holes 219 are formed over the wall 210 so as to allow air and water to flow therethrough. The wall 210 has a circular contour as viewed in the direction of a sectional plane which extends at right angles relative to the axial direction. As shown in Fig. 6, it defines a corrugated angle 0 when it is taken in the axial direction.
212 : linens (articles to be washed) --- --- This represents linens, towels, sheets, shirts or the like which are subjected to washing, dewatering and drying.
215 : duct --- --- As is best seen in Fig. 7, this is secured to the side wall of the outer drum 202 so that hot air is introduced into the interior of the rotary drum 201 therethrough.
216 : door --- --- This is opened when linens are introduced into the interior of the rotary drum 201 but it is kept closed during steps of washing, dewatering and drying. The inner wall of the door 216 comes in close contact with the blowing section 209 of the outer drum 202 so that water, steam, hot air and so forth do not leak from the outer drum 201 to the outside.
217 : beater --- --- A plurality of beaters 217 are attached to the wall 210 of the rotary drum 201. Each beater 217 has a lozenge-shaped contour and exhibits an effective function for lifting up the linen away from the inner wall surface of the inner wall surface of the rotary drum 201 as the latter is rotated.
218 : seal --- --- This is attached to the outer wall surface of the rotary drum 202 so that it comas in slidable contact with the outer peripheral surface 210 of the rotary drum 210. The seal 218 serves to prevent steam, hot air or the like which has been introduced into the interior of the rotary drum 201 via the blowing section 209 from being leaked into the interior of the outer drum 202 while it fails to be introduced into the interior of the rotary drum 201.
219 : hole --- --- A number of holes 210 having a diameter of several millimeters are drilled over the wall 210 of the rotary drum 201. During a step of washing, washing water, detergent or the like in the rotary drum 201 flows in the interior of the outer drum 202 through the holes 218 and vice versa.
   During a step of dewatering, water separated from the linen is discharged in the interior of the outer drum 202 through the holes 218 as the rotary drum 201 is rotated at a rotational high speed.
   During a step of drying, hot air which has been introduced into the interior of the rotary drum 201 carries thermal energy therein for the purpose of drying the linens. After completion of the drying, hot air is discharged in the outer drum 202 through the holes 218. Then, it is discharged further out of the apparatus.
220 : opening --- --- Each opening 220 is provided in the form of a rectangular hole which is arranged round the inner peripheral surface of the blowing section 209. Steam and hot air are introduced into the interior of the rotary drum 201 through the openings 220.
221 : water supply pipe --- --- This is a conduit through which water is introduced into the interior of the rotary drum 201 for the purpose of performing a step of washing.
222 : water discharge pipe --- --- This is used when water is discharged from the outer drum 202 in the course of a step of washing or during a step of washing. A quantity of water to be discharged is controlled by causing a damper 223 to be opened or closed.
223 : damper --- --- When water is discharged from the outer drum 202, the damper 223 is opened so that washing water in the outer drum 202 and water separated from the linen are drained from the outer drum 202 in a waste water discharge trench 232 which is located outside the apparatus. When no water is discharged from the outer drum 202, the damper 223 is kept closed.
224 : heater --- --- When hot air is to be introduced into the interior of the rotary drum 201, air is sucked by rotating a blower (not shown) installed outside the apparatus while it is heated by the heater 224. The heater 224 is usually constructed in accordance with a system wherein heat carried by steam or hot oil is conducted to the sucked air.
226 : exhaust port --- --- This is provided on a location of the outer drum 202 so that air in the outer drum 202 is discharged out of the apparatus therethrough.
227 : lint filter --- --- A large amount of waste threads (lints) derived from the linens is involved in the air discharged from the rotary drum 201. The lints in the discharged air can be caught by allowing the air discharged via the exhaust port 226 to flow through the lint filter 227.
228 : exhaust duct --- --- This is a duct through which the air having the lints removed therefrom while flowing through the lint filter 225 is discharged out of the apparatus.
230 : speed changing unit --- --- This is an unit for adjusting the number of revolutions of the motor 207 as required. It is controlled such that the rotary drum 201 is rotated at an optimum speed during steps of washing and dewatering.
231 : vibration proof unit --- --- The rotary drum 201, the outer drum 202 and associated components are mounted on the vibration proof units 231.
232 : waste water trench --- --- This is a trench into which the water discharged through the waste water pipe 222 is drained out of the laundry shop.

Next, operation of the apparatus as constituted by the above-mentioned components will be stepwise described below.

### (Washing)

A predetermined quantity of water is introduced into the interior of the rotary drum 201 and the outer drum 202 via the water supply pipe 221. Since a number of holes 219 are drilled over the wall 210 of the rotary drum 201, water in the rotary drum 201 flows through the holes 219 to be accumulated in the outer drum 202. This causes the water level in the rotary drum 201 to be gradually raised as water is supplied in that way. When it is found by a water level detector (not shown) adapted to detect the existent water level that a predetermined water level is reached, water supply is interrupted. Then, the door 216 is opened so that linens are introduced into the rotary drum 201. The motor 207 is driven to rotate the rotary drum 201 at a predetermined rotational speed. It should be noted that repeated rotation of the rotary drum 201 in both normal and reverse directions is effective for preventing the linens from being entangled with each other.

Detergent and assistant are introduced into the rotary drum 201 from a detergent/assistant supply unit (not shown) so that preliminary washing is performed. On completion of the preliminary washing, the damper 223 is opened to discharge the used washing water in the waste water trench 232 via the water discharge pipe 223. When it is detected by a sensor (not shown) that discharging of the preliminary washing water is completed after a predetermined period of time elapses, the damper 223 is closed.

Next, washing water is introduced into the rotary drum 201 again until a predetermined water level is reached, and detergent and assistant are introduced thereinto from the detergent/assistant supply unit (not shown) in the same manner as mentioned above.

Then, steam is blown into the outer drum 202 through a steam nozzle (not shown) so that washing water is heated up to a predetermined temperature. Rotation of the rotary drum 201 can be changed as required by changing the number of revolutions of the motor 207 under a control of the speed changing unit 230. (It should be added that washing time can be shortened under the effect of mechanical force generated by shock appearing on the water surface as the linens are displaced up and down in the rotary drum 201 by actuating the beaters 217 as well as under the influence of a forcibly increased relative speed of the linens and washing water as seen when the rotary drum 201 is vibrated by a vibrator (not shown).)

Washing is performed in the hot water in the above-described manner and the washing water involved in the linens is then separated therefrom under the effect of centrifugal force generated by rotation of the rotary drum 201 at an intermediate rotational speed. At this moment, the damper 223 of course is kept opened so that the washing water is discharged from the apparatus via the water discharge pipe 222. Thereafter, the damper 223 is closed so that the rotary drum 201 is refilled with water so as to allow a step of rinsing to be executed. The step of rinsing may be executed in the same manner as the step of washing. When the step of rinsing is completed by repeating supply of washing water and discharge of waste water, a next step of dewatering is initiated.

### (Dewatering)

During a period of dewatering, the rotary drum 201 is rotated while receiving the acceleration as represented by 1 to 1.5 G round the inner wall surface under a control of the speed changing unit 230. This permits the linens in the rotary drum 201 to be substantially uniformly distributed round the inner wall surface. After this operative state has been reached, the rotary drum 201 is in turn rotated at a high speed whereby water in the linens is discharged outwardly of the rotary drum 201 via the holes 219 under the influence of centrifugal force and it is then drained out of the apparatus via the outer drum 202 and water discharge pipe 222.

Here, it should be noted that results derived from a number of tests conducted while the corrugated angle ϑ of the rotary drum 201 is varied are as mentioned above with reference to Figs. 19 to 21. Specifically, when the corrugation angle ϑ was set to 60°, the water content of the linens after completion of the dewatering assumed a value of 60 % which represents a value by 20 % less than that of a conventional apparatus. As shown in Fig.17(B), the linens were kept in close contact with the inner wall surface of the rotary drum 201 and it was found that the apparatus had a problem that the linens failed to fall down by themselves at the time when the step of dewatering was completed.

To obviate the foregoing problem, the corrugation angle was reset to a value more than 100°. As a result, it was confirmed that after completion of the dewatering the linens fell down by their own dead weight under the influence of some quantity of shock imparted to the linens, e.g., by actuating a brake unit (not shown) during rotation of the rotary drum 201 and then quickly stopping rotation of the same. Accordingly, practicability of the apparatus could be recognized.

Further, in a case of the corrugated type rotary drum as shown in Fig. 17, the linens 212 tend to be displaced in the direction F under the effect of centrifugal force during the step of dewatering until they are accumulated in a portion of the rotary drum 201 having a larger diameter, i.e., the apex portion of the same. Since the corrugated type rotary drum is so constructed that vibration usually caused by the unbalanced load of the linens in the rotary drum during the step of dewatering appears at the center of weight or at a position in the proximity of the latter, it has been found that the step of dewatering can be ideally practiced with a reduced magnitude of vibration.

### (Drying)

When it is confirmed that the step of dewatering comes near to termination, hot air heated by the heater 224 is introduced into the interior of the rotary drum 201 via the duct 215 and the blowing section 209 so that a step of drying is initiated subsequent to the step of dewatering. If the linens 212 are brought in tight contact with the inner wall surface of the rotary drum 201 as shown in Fig. 17(B), this makes it impossible to uniformly dry the linens 212 within a short period of time using the hot air introduced into the rotary drum 201.

Namely, to assure that washing, dewatering and drying are successively performed via a series of steps, it is essential that after completion of the dewatering the linens 212 can be removed from the inner wall surface of the rotary drum 201 without any necessity for manual operation.

To this end, the number of revolutions of the rotary drum 201 is so determined that an acceleration remains at a level less than 1 G, preferably in the range of 0.7 to 0.8 G. A temperature sensor or a moisture sensor (not shown) is attached to the exhaust port 226 so that completion of the step of drying can be confirmed by detecting that the waste air has reached a predetermined temperature or moisture.

Incidentally, the foregoing embodiment has been described with respect to a case where the rotary drum has a single corrugated portion. However, the present invention should not be limited only to this. Alternatively, it may be applied to a case where the rotary drum has two corrugated portions with the same advantageous effects as those in the preceding case being assured.

Description has been made above as to a case where washing is performed using water. Alternatively, the present invention may be applied to a so-called dry cleaning machine in which washing is performed using organic solvent such as perchloroethylene or the like.

## Claims

1. A method of processing the wash using a drum type washing apparatus including a rotary drum (107, 201) of a perforated plate to perform at least one step among steps of washing, dewatering and drying the wash in said rotary drum,
that the rotary (107, 201) drum is rotatably supported within an outer drum (202); said apparatus is provided with a door (216) so as to allow the wash (212) to be introduced into the interior of the rotary drum or discharged therefrom while said door is kept opened, said door being located on the axis (103a) of rotation of the rotary drum,
characterized by the steps of
providing the rotary drum with a peripheral wall (107a, 107b, 210) with a potshaped contour having a single corrugated portion in a direction of the drum axis and additionally providing the single corrugated portion with a corrugated angle (θ) opened between 90° and 160° including a direction (108) of action of the centrifugal force of the drum and blowing air into the interior of the the rotary drum (107, 201) from an air blowing duct (209) disposed at the slant upper part of the outer drum (202) around the rotary drum through a nozzle (220) and rotating the rotary drum at the same time, while the door (216) is kept opened so that the wash (212) in the rotary drum is discharged therefrom to the outside via the door under the effect of force generated by flowing of the air.

2. A method for processing the wash according to claim 1 comprising additionally the steps of:
providing an air discharging duct (226) having a damper (227) disposed at the other slant upper part of the outer drum (202) and closing that damper (227) or discharging the linens from the rotary drum through the door (216) by the blowing air.

## Patentansprüche

1. Verfahren zur Behandlung von Wäsche unter Nutzung einer Trommelwaschmaschine mit einer Drehtrommel (107, 201) aus perforiertem Blech zur Ausführung zumindest eines Schritts unter den Schritten Waschen, Schleudern und Trocknen der Wäsche in der Drehtrommel,
wobei die Drehtrommel (107, 201) in einer äußeren Trommel (202) drehbar gelagert ist, die Waschmaschine mit einer Tür (216) versehen ist, die in geöffnetem Zustand das Einlegen der Wäsche in die Drehtrommel bzw. das Herausnehmen der Wäsche daraus ermöglicht, wobei die Tür auf der Drehachse (103a) der Drehtrommel angeordnet ist,
gekennzeichnet durch die Schritte
Versehen der Drehtrommel mit einer bottichförmigen Außenwand (107a, 107b, 210), die einen einzelnen einen Winkel in Richtung Trommelachse umschreibenden Abschnitt aufweist, und zudem Vorsehen eines einzelnen einen Scheitelwinkel (θ) von 90° bis 160° umschreibenden Abschnitts einschließlich einer Wirkrichtung (108) der Zentrifugalkraft der Trommel, Einblasen von Luft in das Innere der Drehtrommel (107, 201) über einen im abgeschrägten oberen Bereich der Außentrommel (202) angeordneten sowie um die Drehtrommel herum geführten Luftkanal (209) durch eine Düse (220) und gleichzeitiges Drehen der Drehtrommel bei geöffneter Tür (216), so daß die in der Drehtrommel befindliche Wäsche (212) unter Einwirkung der durch den Luftstrom entstehenden Kraft durch die Tür aus der Drehtrommel nach außen gefördert wird.

2. Verfahren zum Behandeln von Wäsche nach Anspruch 1, zu dem ferner die Schritte gehören:
Vorsehen eines Luftableitkanals (226) mit einem in dem anderen abgeschrägten oberen Bereich der Außentrommel (202) angeordneten Schieber (227) und Schließen dieses Schiebers (227) zum Austragen der Wäsche mittels Luftstrom aus der Drehtrommel durch die Tür (216).

## Revendications

1. Procédé de traitement du linge utilisant un appareil de lavage du type à tambour incluant un tambour rotatif (107, 201) en une plaque perforée pour réaliser au moins une étape parmi des étapes de lavage, d'essorage et de séchage du linge dans ledit tambour rotatif, le tambour rotatif (107, 201) étant supporté de façon rotative dans un tambour externe (202), ledit appareil étant muni d'une porte (216) pour permettre au linge (212) d'être introduit à l'intérieur du tambour rotatif ou déchargé de celui-ci tandis que ladite porte est maintenue ouverte, ladite porte étant située sur l'axe de rotation (103a) du tambour rotatif,
caractérisé par les étapes de munir le tambour rotatif d'une paroi périphérique (107a, 107b, 210) avec un contour en forme de pot présentant une partie pliée unique dans une direction de l'axe du tambour et munir, de plus, la partie pliée unique d'un angle (θ) ouvert entre 90° et 160° incluant la direction d'action (108) de la force centrifuge du tambour, et souffler de l'air à l'intérieur du tambour rotatif (107, 201) à partir d'un conduit (209) de soufflage d'air disposé au niveau de la partie supérieure inclinée du tambour externe (202) autour du tambour rotatif à travers une buse (220), et faire tourner le tambour rotatif au même moment, tandis que la porte (216) est maintenue ouverte, de sorte que le linge (212) dans le tambour rotatif est déchargé de celui-ci vers l'extérieur via la porte sous l'effet de la force engendrée par l'écoulement de l'air.

2. Procédé de traitement du linge selon la revendication 1, comprenant de plus les étapes de prévoir un conduit d'évacuation d'air (226) ayant un registre (227) disposé au niveau de l'autre partie supérieure inclinée du tambour externe (202), et de fermer ce registre (227) pour décharger le linge du tambour rotatif à travers la porte (216) par l'air de soufflage.
